# EUROPEAN PATENT APPLICATION

(11) **EP 4 769 498 A1**
(43) Date of publication of application: **01.07.2026**
(21) Application number: 25790402.9
(22) Date of filing: 31.03.2025
(51) Int. Cl.: H01M 4/04, G01B 11/14, B65H 43/04

(54) **APPARATUS AND METHOD FOR MANUFACTURING ELECTRODE SHEET**

(30) Priority: 15.04.2024 KR 20240050197; 11.12.2024 KR 20240183605
(71) Applicant: LG ENERGY SOLUTION, LTD., Seoul 07335 (KR)
(72) Inventor: NA, Seon Hyeong, Yuseong-gu Daejeon 34122 (KR); YU, Hyung Kyun, Yuseong-gu Daejeon 34122 (KR); PAENG, Ki Hoon, Yuseong-gu Daejeon 34122 (KR)
(74) Representative: Goddar, Heinz J.
(86) International application number: PCT/KR2025/004140
(87) International publication number: WO 2025/220916

(57) **Abstract**

The present disclosure relates to an electrode sheet manufacturing device, and the electrode sheet manufacturing device according to one aspect of the present disclosure may include an electrode sheet supply unit for supplying an electrode sheet including a foil-shaped current collector, an adhesive layer provided on one surface of the current collector, and an electrode layer formed on an outer surface of the adhesive layer; an infrared sensor for obtaining information on infrared rays emitted by the electrode sheet; and a processor for determining whether the electrode sheet is defective based on the information on the infrared rays, wherein the processor, based on the information on the infrared rays, may calculate information on a position of at least one of an electrode area where the electrode layer is formed and an adhesive area where the adhesive layer is formed on one surface of the current collector, and may determine whether the electrode sheet is defective based on the information on the position.

## Description

### TECHNICAL FIELD

### CROSS-REFERENCE TO RELATED APPLICATIONS

The present application is based on and claims priority from Korean Patent Application No. 10-2024-0050197, filed on April 15, 2024 and Korean Patent Application No. 10-2024-0183605, filed on December 11, 2024, with the Korean Intellectual Property Office, the disclosure of which is incorporated herein in its entirety by reference.

### TECHNICAL FIELD

The present disclosure relates to an electrode sheet manufacturing device and method, and more specifically, to a device and method for manufacturing an electrode sheet capable of charging and discharging electric energy.

### BACKGROUND ART

A secondary battery has been applied to small-sized applications such as mobile devices or laptop computers, but recently, the research direction has been expanded to medium and large-sized applications, and it is widely used in applications requiring high voltage and large capacity in relation to energy storage systems (ESSs) or electric vehicles (EVs).

A secondary battery may be manufactured by accommodating an electrode assembly and an electrolyte in a case. Here, the electrode assembly may be formed by cutting and stacking or winding an electrode sheet in a predetermined manner. The electrode sheet may be formed by applying an electrode active material to a foil-shaped current collector, and recently, a product and manufacturing process in which an electrode active material is applied to a current collector coated with an adhesive layer have been developed to increase the coupling force between the current collector and the electrode active material.

At this time, the electrode active material is preferably applied within the area where the adhesive layer is formed on the current collector. This is because, if the electrode active material is applied to an area where the adhesive layer is not formed, the coupling force between the electrode active material and the current collector is not sufficient, and thus they may be detached from each other during the charging and discharging process. This detachment phenomenon has the problem of significantly increasing the resistance of the electrode assembly.

In order to prevent the occurrence of such defects, it is necessary to perform a process of determining whether the electrode active material is properly applied within the area where the adhesive layer is applied on the current collector. Conventionally, in order to determine whether the electrode active material is properly applied to the current collector, a vision sensor is used or the operator directly observes the electrode sheet with the naked eye.

However, when the colors of the electrode active material and the adhesive layer are similar, it is difficult to determine whether the electrode sheet is good or defective using only a vision sensor or the operator's eyesight as in the prior art. Accordingly, there has been an urgent need to develop a manufacturing device and method that may manufacture a good quality electrode sheet regardless of the colors of the electrode active material and the adhesive layer.

### SUMMARY

### TECHNICAL PROBLEM

The present disclosure is designed to solve the above-described problems, and therefore the present disclosure is directed to providing an electrode sheet manufacturing device and method capable of manufacturing a good quality electrode sheet in which an electrode active material is properly applied within an area where an adhesive layer is formed.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, disclosed is an electrode sheet manufacturing device including an electrode sheet supply unit including a foil-shaped current collector, an adhesive layer provided on one surface of the current collector, and an electrode layer formed on an outer surface of the adhesive layer; an infrared sensor for obtaining information on infrared rays emitted by the electrode sheet; and a processor for determining whether the electrode sheet is defective based on the information on the infrared rays, wherein the processor, based on the information on the infrared rays, calculates information on a position of at least one of an electrode area where the electrode layer is formed and an adhesive area where the adhesive layer is formed on one surface of the current collector, and determines whether the electrode sheet is defective based on the information on the position.

At this time, the adhesive layer and the electrode layer may have the same color.

At this time, the electrode sheet manufacturing device may further include a heater for applying heat to the electrode sheet, wherein the infrared sensor may obtain information on infrared rays emitted by the adhesive layer and the electrode layer heated by the heater.

At this time, the heater and the infrared sensor may be arranged side by side along a transfer direction of the electrode sheet.

At this time, the heater and the infrared sensor may be arranged side by side along a direction perpendicular to the transfer direction of the electrode sheet.

At this time, the heater and the infrared sensor may be spaced apart from each other in a direction perpendicular to the electrode sheet with the electrode sheet interposed therebetween.

At this time, the electrode sheet manufacturing device may further include a drying unit for drying the electrode sheet.

At this time, the infrared sensor may obtain information on the infrared rays at the front end of the drying unit in the transfer direction of the electrode sheet.

According to another aspect of the present disclosure, there is provided an electrode sheet manufacturing method including a step of providing an electrode sheet including a foil-shaped current collector, an adhesive layer provided on one surface of the current collector, and an electrode layer formed on an outer surface of the adhesive layer; a step of obtaining information on infrared rays emitted by the electrode sheet; a step of calculating information on a position of at least one of an electrode area where the electrode layer is formed and an adhesive area where the adhesive layer is formed on one surface of the current collector based on the information on the infrared rays; and a step of determining whether the electrode sheet is defective based on the information on the position.

At this time, the adhesive layer and the electrode layer may have the same color.

At this time, the electrode sheet manufacturing method may further include a heating step of applying heat to the electrode sheet, wherein in the step of obtaining information on the infrared rays, information on infrared rays emitted by the electrode sheet heated in the heating step may be obtained.

At this time, the electrode sheet manufacturing method may further include a drying step of drying the electrode sheet, wherein the step of obtaining information on the infrared rays may be performed before the drying step.

At this time, the step of calculating the position information may include a step of identifying the edge of the current collector; and a step of identifying the edge of the electrode area.

At this time, the step of providing the electrode sheet may include a step of providing an adhesive sheet including the current collector and the adhesive layer; and a step of forming the electrode layer by applying an electrode active material to an outer surface of the adhesive layer, wherein the step of calculating the position information may further include a step of calculating a first measurement interval which is an interval between the edge of the current collector and the edge of the electrode area.

At this time, the electrode sheet manufacturing method may further include a step of adjusting a position where the electrode layer is formed in the adhesive sheet, based on the information on the position, wherein the step of adjusting the position where the electrode layer is formed may include a step of comparing the first measurement interval with a first reference interval; and a step of moving the position where the electrode layer is formed to one side of the adhesive sheet in the width direction, if the first measurement interval is greater than the first reference interval; and a step of moving the position where the electrode layer is formed to the other side of the adhesive sheet in the width direction, if the first measurement interval is less than the first reference interval.

At this time, the step of calculating the position information may further include a step of identifying the edge of the adhesive area.

At this time, the step of determining whether the electrode sheet is defective may include a step of determining that the electrode sheet is defective if the edge of the adhesive area is not identified.

At this time, the step of calculating the position information may further include a step of calculating a second measurement interval which is an interval between the edge of the adhesive area and the edge of the electrode area.

At this time, the electrode sheet manufacturing method may further include a step of adjusting a position where the electrode layer is formed on the adhesive sheet, based on the information on the position, wherein the step of adjusting the position where the electrode layer is formed may include a step of comparing the second measurement interval with a second reference interval; and a step of moving the position where the electrode layer is formed to one side of the adhesive sheet in the width direction, if the second measurement interval is greater than the second reference interval; and a step of moving the position where the electrode layer is formed to the other side of the adhesive sheet in the width direction, if the second measurement interval is less than the second reference interval.

At this time, the step of determining whether the electrode sheet is defective may include a step of comparing the second measurement interval with a critical interval, if the edge of the adhesive area is identified; and a step of determining that the electrode sheet is defective, if the second measurement interval is greater than the critical interval.

### ADVANTAGEOUS EFFECTS

According to one aspect of the present disclosure, an infrared sensor obtains information on infrared rays emitted from an electrode sheet, and a processor is configured to calculate information on an area where an electrode layer is formed on a current collector based on the information on the infrared rays to determine whether the electrode sheet is good or defective, and thus even in a situation of being difficult to distinguish between an area where an electrode layer is formed and an area where an adhesive layer is formed on a current collector, whether the electrode sheet is good or defective may be accurately determined. Through this, a good quality electrode sheet in which an electrode active material is properly applied within an area where the adhesive layer is formed may be manufactured.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a view schematically showing that an electrode sheet manufacturing device according to a first embodiment of the present disclosure manufactures an electrode sheet.
FIG. 2 is an enlarged view of part A of FIG. 1. At this time, the adhesive sheet is illustrated in a vertical cross-section.
FIG. 3 is a plan view schematically illustrating a portion of the adhesive sheet illustrated in FIG. 2.
FIG. 4 is an enlarged view of part B of FIG. 1. At this time, the electrode sheet is illustrated in a vertical cross-section.
FIG. 5 is a plan view schematically illustrating a portion of the electrode sheet illustrated in FIG. 4.
FIG. 6 is a view schematically showing a process in which an electrode layer forming unit, an infrared sensor, and a heater of an electrode sheet manufacturing device according to a second embodiment of the present disclosure manufacture an electrode sheet.
FIG. 7 is a view schematically showing a process in which an electrode layer forming unit, an infrared sensor, and a heater of an electrode sheet manufacturing device according to a third embodiment of the present disclosure manufacture an electrode sheet.
FIG. 8 is a view schematically showing a process in which an infrared sensor and a heater of an electrode sheet manufacturing device according to a fourth embodiment of the present disclosure manufacture an electrode sheet.
FIG. 9 is a flow chart of an electrode sheet manufacturing method according to one embodiment of the present disclosure.
FIG. 10 is a flow chart that subdivides steps S40 to S60 of FIG. 9.
FIG. 11 is a plan view schematically showing one example of an electrode sheet determined to be a good product by an electrode sheet manufacturing method according to one embodiment of the present disclosure.
FIG. 12 is a plan view schematically showing one example of an electrode sheet determined to be a defective product by an electrode sheet manufacturing method according to one embodiment of the present disclosure.
FIG. 13 is a plan view schematically showing another example of an electrode sheet determined to be a defective product by an electrode sheet manufacturing method according to one embodiment of the present disclosure.
FIG. 14 is a flow chart that subdivides steps S40 and S60 of FIG. 9.

### DETAILED DESCRIPTION

Preferred embodiments of the present disclosure are described in detail to enable those skilled in the art to easily carry out the disclosure. However, the present disclosure may be implemented in various different forms and is not limited or restricted by the following embodiments.

In order to clearly describe the present disclosure, detailed descriptions of portions unrelated to the present disclosure or known technologies that may unnecessarily obscure the gist of the present disclosure have been omitted, and when assigning reference numerals to components in each drawing in this specification, the same or similar reference numerals are assigned to the same or similar components throughout the specification.

Additionally, the terms or words used in the specification and claims should not be construed as limited to their ordinary or dictionary meanings, but should be construed as meanings and concepts consistent with the technical idea of the present disclosure based on the principle that inventors may appropriately define the concepts of terms in order to explain their invention in the best way.

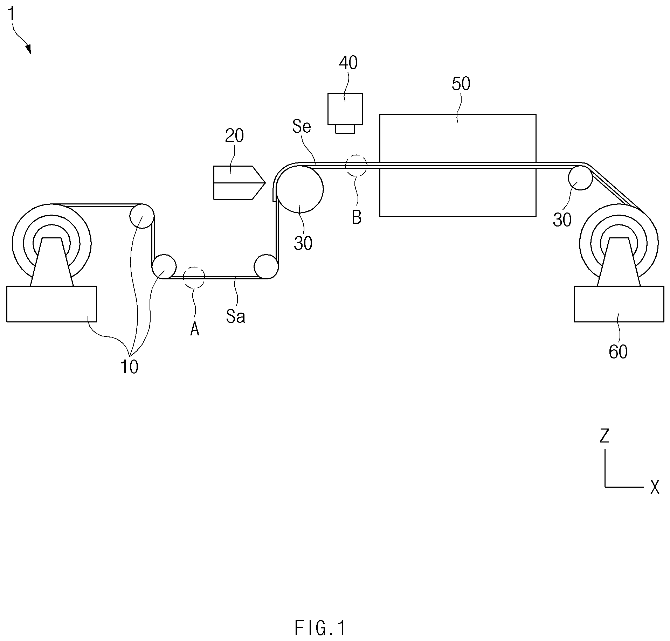

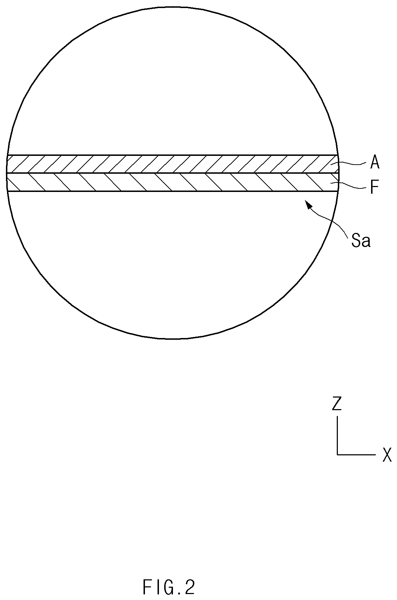

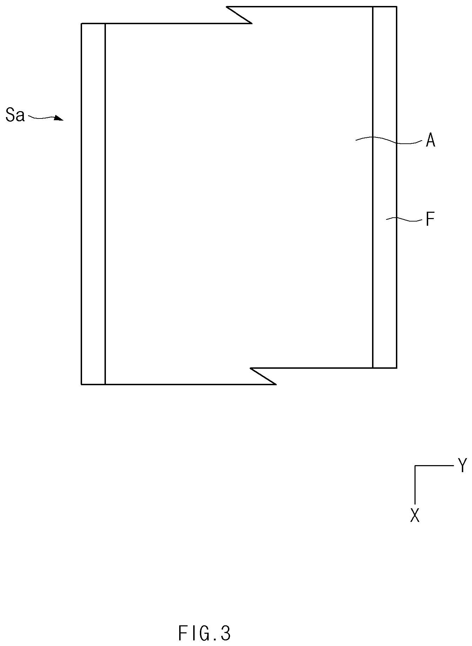

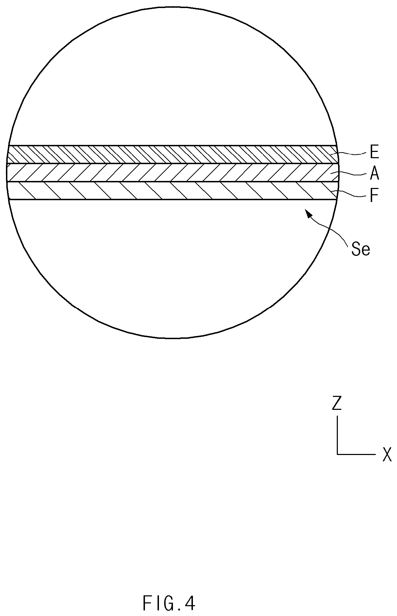

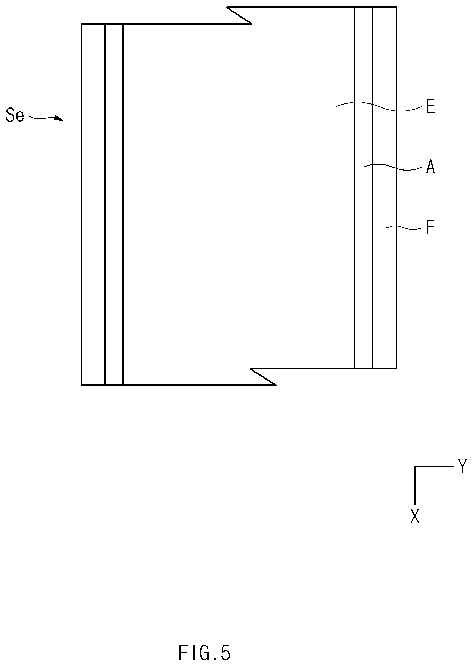

FIG. 1 is a view schematically showing that an electrode sheet manufacturing device according to a first embodiment of the present disclosure manufactures an electrode sheet. FIG. 2 is an enlarged view of part A of FIG. 1. At this time, the adhesive sheet is illustrated in a vertical cross-section. FIG. 3 is a plan view schematically illustrating a portion of the adhesive sheet illustrated in FIG. 2. FIG. 4 is an enlarged view of part B of FIG. 1. At this time, the electrode sheet is illustrated in a vertical cross-section. FIG. 5 is a plan view schematically illustrating a portion of the electrode sheet illustrated in FIG. 4.

In FIG. 1, an electrode sheet manufacturing device (hereinafter, referred to as a manufacturing device) 1 according to the first embodiment of the present disclosure is disclosed. Referring to FIG. 1, the manufacturing device 1 according to the first embodiment of the present disclosure is a device that manufactures an electrode sheet Se using an adhesive sheet Sa.

At this time, the adhesive sheet Sa may be named as a primer coated foil. The electrode sheet Se may be named as a negative electrode sheet or a positive electrode sheet depending on the material of the current collector F and the electrode layer E to be described later.

Referring to FIGS. 2 to 5, in the present disclosure, the adhesive sheet Sa may include a current collector F in the shape of a foil and an adhesive layer A formed on one surface of the current collector F. The electrode sheet Se may include the adhesive sheet Sa and the electrode layer E.

At this time, the electrode layer E may be a layer formed on the outer surface of the adhesive layer A included in the adhesive sheet Sa. The electrode layer E may be made of an electrode active material. Hereinafter, an area where the adhesive layer A is formed on one surface of the current collector F is called an adhesive area, and an area where the electrode layer E is formed is called an electrode area.

In the present disclosure, the current collector F may be a metal thin film made of aluminum (Al) or copper (Cu). However, the material of the current collector F is not particularly limited as long as it may allow a current to flow.

In the present disclosure, the adhesive layer A may be formed of at least one of a PVDF-based binder, an acrylic-based binder, and a PI-based binder. However, the material of the adhesive layer A is not particularly limited as long as it may couple the current collector F and the electrode layer E. The adhesive layer A may be called a primer layer.

In the present disclosure, the electrode active material forming the electrode layer E may be lithium-cobalt oxide (LCO), lithium-manganese oxide (LMO), nickel-cobalt-manganese (NCM), nickel-cobalt-aluminum (NCA), lithium-iron phosphate (LFP), graphite (C), silicon (Si), and the like, but the type is not particularly limited.

Meanwhile, in the present disclosure, the electrode sheet Se is illustrated that the adhesive layer A and the electrode layer E are provided only on one surface of the current collector F. However, the adhesive layer A and the electrode layer E may be provided on both surfaces of the current collector F.

Referring to FIG. 1 again, the manufacturing device 1 according to the first embodiment of the present disclosure may include an adhesive sheet supply unit 10. The adhesive sheet supply unit 10 may be a unit for supplying the adhesive sheet Sa to another configuration of the present manufacturing device 1.

As illustrated, the adhesive sheet supply unit 10 may be composed of an unwinder for unwinding an adhesive sheet Sa wound into a cylindrical shape and transfer rollers for transferring the unwound adhesive sheet Sa. However, the structure or operation method of the adhesive sheet supply unit 10 is not particularly limited as long as it may supply the adhesive sheet Sa.

Referring to FIGS. 1 to 5, the manufacturing device 1 according to the first embodiment of the present disclosure may include an electrode layer forming unit 20. In the present embodiment, the electrode layer forming unit 20 may be a unit for forming the electrode layer E on the outer surface of the adhesive sheet Sa supplied from the adhesive sheet supply unit 10.

In the present embodiment, the electrode layer forming unit 20 may form the electrode layer E on the outer surface of the adhesive layer A in the adhesive sheet Sa. Through this, the electrode layer E may be coupled to the current collector F via the adhesive layer A.

Meanwhile, in the present embodiment, the color of the electrode layer E formed by the electrode layer forming unit 20 may be the same as the color of the adhesive layer A of the electrode sheet Sa. At this time, it should be understood that the two colors being identical includes not only two colors that are completely the same, but also two colors that have such a minute difference that they are indistinguishable through the naked eye or a vision sensor.

At this time, the manufacturing device 1 according to the first embodiment of the present disclosure may be configured to adjust the position where the electrode layer E is formed. To this end, the manufacturing device 1 may further include a position adjustment unit (not shown) for moving the electrode layer forming unit 20. The position adjustment unit may be configured to move the electrode layer forming unit 20 in the width direction (Y-axis direction) of the adhesive sheet Sa.

This configuration may be to prevent the electrode layer E and the current collector F from directly contacting each other by ensuring that the electrode layer E is formed within the adhesive area of the adhesive sheet Sa and not in an area other than the adhesive area.

This is because, if the electrode layer E is formed in an area other than the adhesive area of the current collector F, the coupling force between the electrode layer E and the current collector F is not sufficient, and thus the electrode layer E may be detached from the current collector F. This detachment phenomenon may increase the resistance of the electrode.

Meanwhile, the adhesive sheet supply unit 10, the electrode layer forming unit 20, and the position adjustment unit described above in the present embodiment may be collectively referred to as an electrode sheet supply unit. As necessary, the electrode sheet supply unit may be configured as a unit that supplies the formed electrode sheet Se, rather than a unit that forms the electrode layer E on the adhesive sheet Sa. For example, the electrode sheet supply unit may be configured as a unit that unwinds the electrode sheet Se wound into a cylindrical shape.

Referring to FIG. 1 again, the manufacturing device 1 according to the first embodiment of the present disclosure may include a transfer unit 30. The transfer unit 30 may be a unit for transferring the electrode sheet Se formed by the electrode layer forming unit 20 to another configuration to be described later.

As illustrated, the transfer unit 30 may be composed of transfer rollers that transfer the electrode sheet Se in the right direction (positive direction of the X-axis). However, the structure of the transfer unit 30 is not particularly limited as long as it may transfer the electrode sheet Se. Additionally, a direction in which the electrode sheet Se is transferred may be appropriately changed as necessary.

Referring to FIGS. 1 to 5, the manufacturing device 1 according to the first embodiment of the present disclosure may include an infrared sensor 40. The infrared sensor 40 may be a sensor for obtaining information on infrared rays emitted from the electrode sheet Se. In one example, the information on the infrared rays may be data about an infrared video or image.

The wavelength of infrared rays depends on the composition, shape, and temperature of the object emitting the infrared rays, and is independent of the color of the object emitting the infrared rays. In other words, the object emits infrared rays of a specific wavelength depending on the temperature, and the infrared rays may be determined according to Wien's displacement law. And, the infrared sensor 40 may collect information on infrared rays and measure the temperature of the object according to Wien's law. Here, the shape that does not affect the wavelength of infrared rays may include the thickness of a layer. Therefore, by using the information obtained by the infrared sensor 40, the adhesive area and electrode area provided on one surface of the current collector F may be distinguished regardless of the color or thickness of the adhesive layer A and the electrode layer E, and whether the electrode sheet Se is good or defective may be determined.

At this time, in the present embodiment, the infrared sensor 40 may be positioned to face one surface of the current collector F where the adhesive layer A and the electrode layer E are formed among both surfaces thereof. This may be to more easily receive infrared rays including information on the adhesive area and the electrode area.

However, the infrared sensor 40 may be positioned to face the other surface of the current collector F opposite to the one surface where the adhesive layer A and the electrode layer E are formed among both surfaces thereof, as necessary.

Meanwhile, in the present embodiment, the infrared sensor 40 may be positioned at the front end of the drying unit 50 to be described later when viewed in the transfer direction of the electrode sheet Se. This may be to receive infrared rays emitted by the electrode sheet Se in a state of being not affected by the drying unit 50.

However, if the electrode area and the adhesive area may be distinguished by the infrared information emitted by the electrode sheet Se affected by the drying unit 50, the infrared sensor 40 may be positioned at the rear end of the drying unit 50 when viewed in the transfer direction of the electrode sheet Se.

Referring to FIG. 1 again, the manufacturing device 1 according to the first embodiment of the present disclosure may include a drying unit 50. The drying unit 50 may be a unit for drying the electrode layer E of the electrode sheet Se.

To this end, the drying unit 50 may be configured to apply heat to the electrode sheet Se. However, the structure or operation method of the drying unit 50 is not particularly limited as long as it may dry the electrode layer E.

The manufacturing device 1 according to the first embodiment of the present disclosure may include an electrode sheet recovery unit 60. In the present embodiment, the electrode sheet recovery unit 60 may be a unit for recovering and storing the manufactured electrode sheet Se.

As illustrated, the electrode sheet recovery unit 60 may be configured as a winding machine that winds the electrode sheet Se into a cylindrical shape. However, the structure of the electrode sheet recovery unit 60 is not particularly limited as long as it may recover the electrode sheet Se and store it in a predetermined form.

Referring to FIGS. 1 to 5 again, the manufacturing device 1 according to the first embodiment of the present disclosure may include a processor (not shown). In the present embodiment, the processor may be configured to determine whether the electrode sheet Se is defective based on information obtained by the infrared sensor 40.

To this end, the processor may be composed of an electric circuity, a processor, a central processing unit (CPU), a controller, an arithmetic logic unit, an operational logic circuit, a digital signal processing device, a microcomputer, an FPGA, a system on a chip (SoC), a programmable logic unit, a microprocessor, or any device capable of performing the functions described below, but is not limited thereto.

In the present embodiment, the processor may be configured to calculate information on the position of the electrode area in the current collector F based on information on infrared rays obtained by the infrared sensor 40, and determine whether the electrode sheet Se is defective based on the information on the position.

And, the processor may be configured to adjust the position of the electrode layer forming unit 20 using the information on the position. Through this, the electrode layer E may be formed in a more preferable position in the electrode sheet Se to be manufactured later.

In this way, the manufacturing device 1 according to the first embodiment of the present disclosure is configured to determine whether the electrode sheet Se is good or defective based on information on infrared rays, and thus even in a situation of being difficult to distinguish between the adhesive area and the electrode area, the defect of the electrode sheet Se may be accurately determined and the position of the electrode layer E may be appropriately adjusted. Through this, a good quality electrode sheet Se in which the electrode area is appropriately formed within the adhesive area may be manufactured.

A specific method by which the processor according to the present embodiment determines whether the electrode sheet Se is good or defective using information on infrared rays and adjusts the position where the electrode layer E is formed will be described later together with the electrode sheet manufacturing method according to one embodiment of the present disclosure.

Hereinafter, a manufacturing device according to another embodiment of the present disclosure will be described with different drawings.

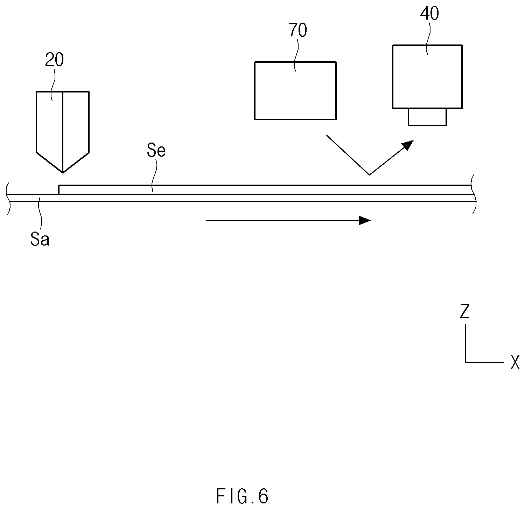

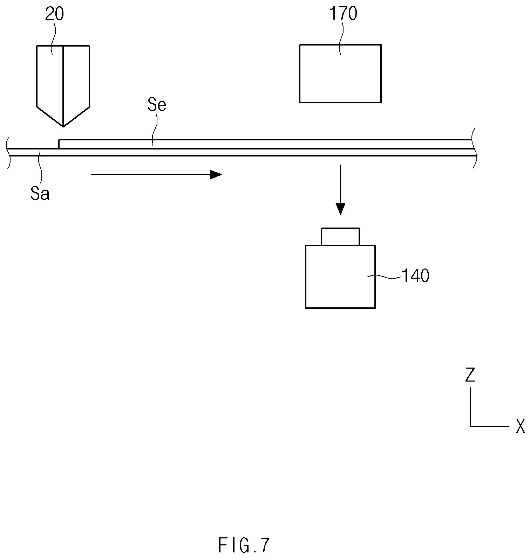

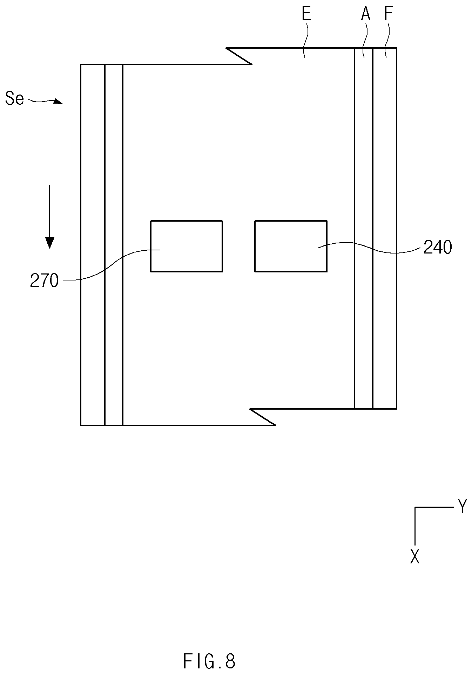

FIG. 6 is a view schematically showing a process in which an electrode layer forming unit, an infrared sensor, and a heater of an electrode sheet manufacturing device according to a second embodiment of the present disclosure manufacture an electrode sheet. FIG. 7 is a view schematically showing a process in which an electrode layer forming unit, an infrared sensor, and a heater of an electrode sheet manufacturing device according to a third embodiment of the present disclosure manufacture an electrode sheet. FIG. 8 is a view schematically showing a process in which an infrared sensor and a heater of an electrode sheet manufacturing device according to a fourth embodiment of the present disclosure manufacture an electrode sheet.

FIG. 6 discloses a manufacturing device according to the second embodiment of the present disclosure. Referring to FIG. 6, the manufacturing device according to the second embodiment of the present disclosure may further include a heater 70. In the present embodiment, the heater 70 may be configured to apply heat to the electrode sheet Se.

According to the present embodiment, the electrode sheet Se may be heated to a more appropriate temperature by the heater 70, so that infrared rays capable of more easily or clearly distinguishing the adhesive area and the electrode area may be emitted. The operating temperature of the heater 70 may be 25 degrees to 200 degrees. The operating temperature may be appropriately adjusted according to the distance between the heater 70 and the electrode sheet Se, the area of the heater 70 and the electrode sheet Se, and the like.

At this time, in the present embodiment, the heater 70 and the infrared sensor 40 may be arranged side by side in a direction in which the electrode sheet Se is transferred (X-axis direction). In the transfer direction of the electrode sheet Se (positive direction of the X-axis), the heater 70 may be positioned at the front end of the infrared sensor 40. However, as necessary, the heater 70 may be positioned at the rear end of the infrared sensor 40.

FIG. 7 discloses a manufacturing device according to the third embodiment of the present disclosure. Referring to FIG. 7, the heater 170 and the infrared sensor 140 of the manufacturing device according to the third embodiment of the present disclosure may be spaced apart from each other in a direction (Z-axis direction) perpendicular to the electrode sheet Se with the electrode sheet Se interposed therebetween.

At this time, as illustrated, the heater 170 may be positioned to face one surface of the current collector F where the adhesive layer and electrode layer are formed among both surfaces thereof, and the infrared sensor 140 may be positioned to face the other surface of the current collector F opposite to the one surface among both surfaces thereof. Through this, the adhesive layer and the electrode layer may be heated more directly by the heater 170.

Of course, the positions of the heater 170 and the infrared sensor 140 may be changed as necessary. More specifically, the infrared sensor 140 may be positioned to face one surface of the current collector F where the adhesive layer and electrode layer are formed among both surfaces thereof, and the heater 170 may be positioned to face the other surface of the current collector F opposite to the one surface among both surfaces thereof. Through this, the infrared sensor 140 may be able to receive infrared rays emitted from the adhesive layer and the electrode layer more directly.

FIG. 8 discloses a manufacturing device according to the fourth embodiment of the present disclosure. Referring to FIG. 8, the heater 270 and the infrared sensor 240 of the manufacturing device according to the fourth embodiment of the present disclosure may be arranged side by side in a direction (Y-axis direction) perpendicular to the transfer direction (X-axis direction) of the electrode sheet Se.

In other words, the heater 270 and the infrared sensor 240 may be arranged side by side in the width direction (Y-axis direction) of the electrode sheet Se. Accordingly, the present manufacturing device may be provided in a more compact structure.

Hereinafter, an electrode sheet manufacturing method (hereinafter referred to as a manufacturing method) according to one embodiment of the present disclosure will be described with different drawings.

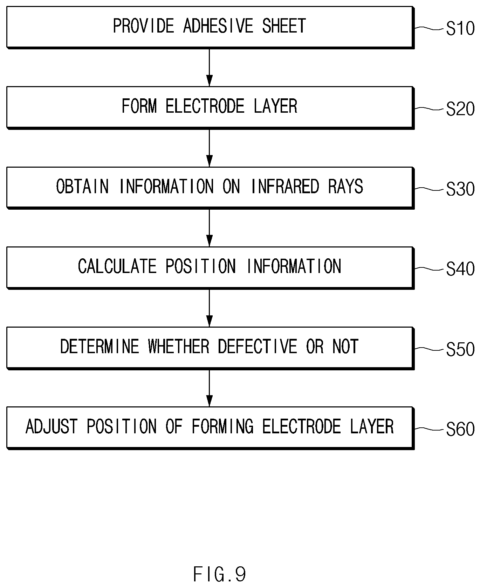

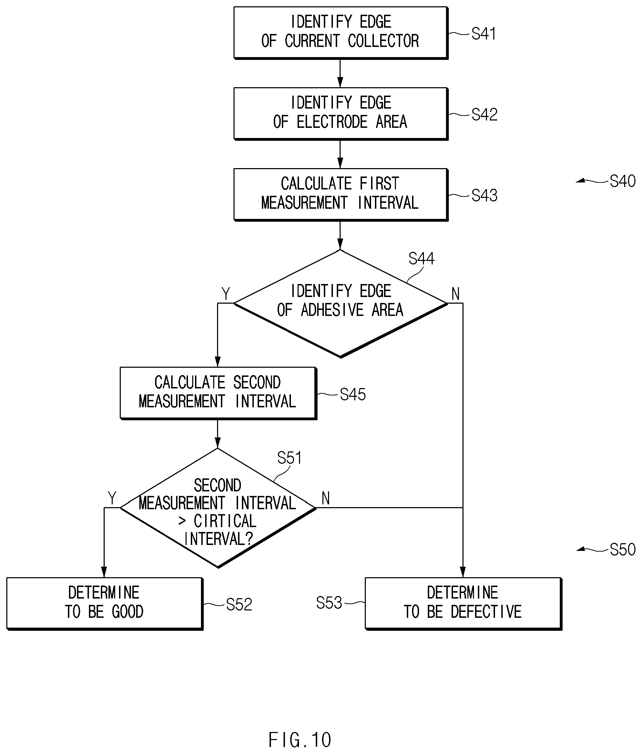

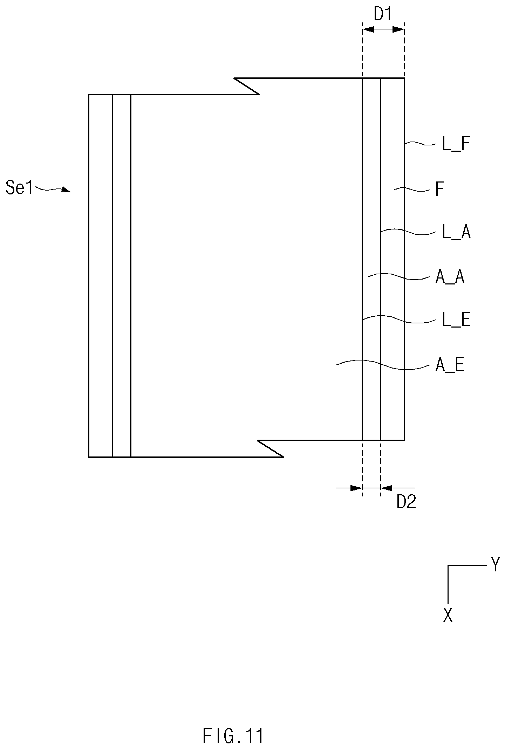

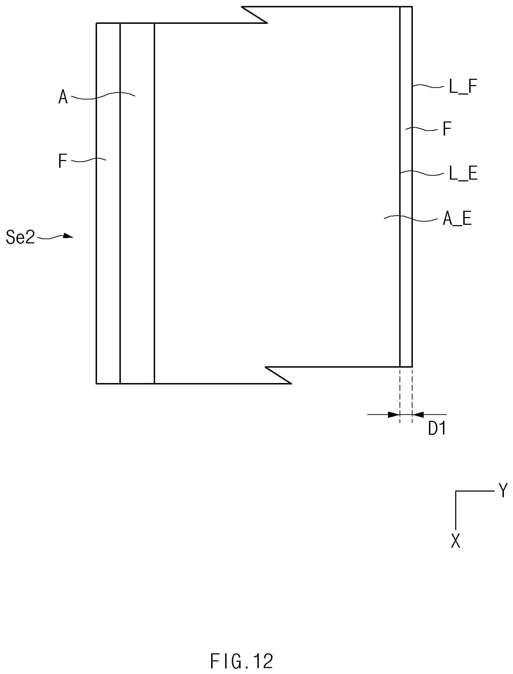

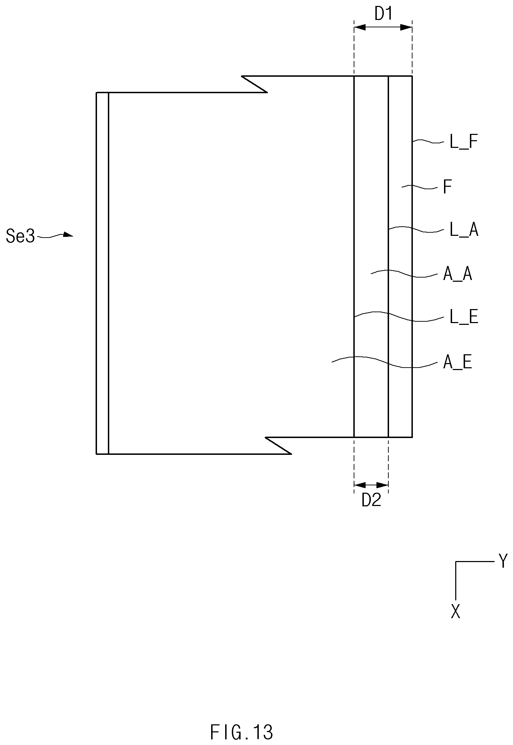

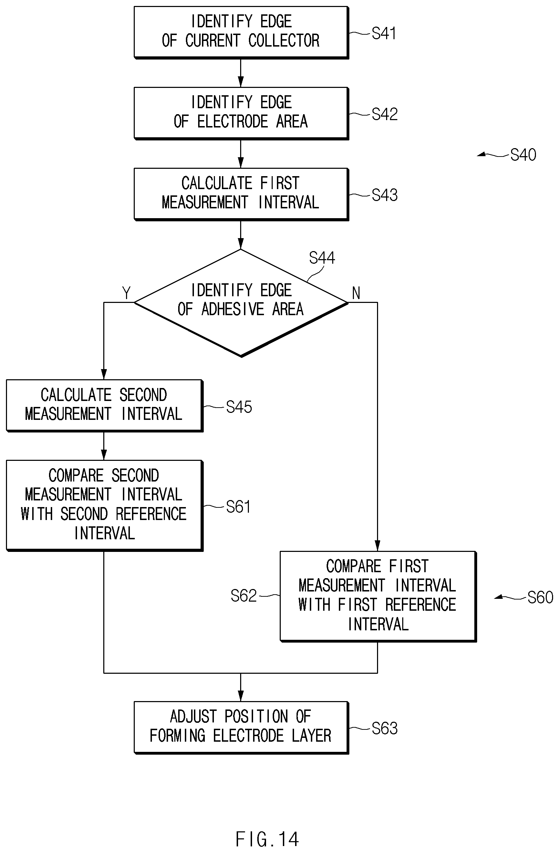

FIG. 9 is a flow chart of an electrode sheet manufacturing method according to one embodiment of the present disclosure. FIG. 10 is a flow chart that subdivides steps S40 and S50 of FIG. 9. FIG. 11 is a plan view schematically showing one example of an electrode sheet determined to be a good product by an electrode sheet manufacturing method according to one embodiment of the present disclosure. FIG. 12 is a plan view schematically showing one example of an electrode sheet determined to be a defective product by an electrode sheet manufacturing method according to one embodiment of the present disclosure. FIG. 13 is a plan view schematically showing another example of an electrode sheet determined to be a defective product by an electrode sheet manufacturing method according to one embodiment of the present disclosure. FIG. 14 is a flow chart that subdivides steps S40 and S60 of FIG. 9.

Referring to FIG. 2, the manufacturing method according to one embodiment of the present disclosure is a method of manufacturing an electrode sheet Se using an adhesive sheet Sa. At this time, the manufacturing method according to one embodiment of the present disclosure may be performed by a manufacturing device according to the embodiment of the present disclosure described above.

The processor of the manufacturing device according to the embodiment of the present disclosure may control the operation of other components to perform at least one of the steps of the manufacturing method to be described later. However, the present manufacturing method is not limited to being performed only by the manufacturing device described above.

Referring to FIGS. 9 to 11, in the manufacturing method according to one embodiment of the present disclosure, an adhesive sheet Sa is provided (S10), and an electrode layer E is formed on the outer surface of the adhesive sheet Sa (S20). At this time, steps S10 and S20 may be collectively referred to as steps of providing an electrode sheet.

Then, information on infrared rays emitted from the electrode sheet Se is obtained (S30). At this time, the information on infrared rays may include data on an infrared video or an infrared image obtained by photographing the electrode sheet Se.

Referring to FIGS. 9 and 10, in the manufacturing method according to one embodiment of the present disclosure, information on infrared rays is obtained (S30), and information on the position of at least one of the electrode area A_E and the adhesive area A_A is calculated based on the information obtained in step S30 (hereinafter referred to as infrared information) (S40).

At this time, in the present embodiment, information on the position of the electrode area A_E may include data on a first measurement interval D1 to be described later, and information on the position of the adhesive area A_A may include data on a second measurement interval D2 to be described later.

Referring to FIGS. 10 and 11, in step S40 of the manufacturing method according to one embodiment of the present disclosure, the edge L_F of the current collector F is identified using infrared information (S41), the edge L_E of the electrode area A_E is identified (S42), and the first measurement interval D1, which is the interval between the edge L_F of the current collector F and the edge L_E of the electrode area A_E, is calculated (S43). At this time, the order of steps S41 and S42 is not particularly limited.

At this time, the edge L_F of the current collector F identified in step S41 according to the present embodiment may be an edge provided on any one side of the edges provided on both sides of the electrode sheet Se in the width direction (Y-axis direction).

And, the edge L_E of the electrode area A_E identified in step S42 may be an edge provided closer to the edge L_F of the current collector F identified in step S41 among the edges provided on both sides of the electrode sheet Se in the width direction (Y-axis direction).

At this time, in the present embodiment, the first measurement interval D1 may be an interval between the edges measured at a specific point in the length direction (X-axis direction) of the electrode sheet Se. Alternatively, the first measurement interval D1 may be an average value of the intervals between the edges measured at one section in the length direction (X-axis direction) of the electrode sheet Se. The first measurement interval D1 may be appropriately defined as necessary.

In step S40 of the manufacturing method according to one embodiment of the present disclosure, the edge L_A of the adhesive area A_A is identified (S44), and if the edge L_A of the adhesive area A_A may be identified, the second measurement interval D2, which is the interval between the edge L_A of the adhesive area A_A and the edge L_E of the electrode area A_E, is calculated (S45). At this time, the order between steps S41 to S44 is not particularly limited.

At this time, in the present embodiment, the edge L_A of the adhesive area A_A identified in step S44 may be an edge provided closer to the edge L_F of the current collector F identified in step S41 among the edges provided on both sides of the electrode sheet Se in the width direction (Y-axis direction).

At this time, in the present embodiment, the second measurement interval D2 may be an interval between the edges measured at a specific point in the length direction (X-axis direction) of the electrode sheet Se. Alternatively, the second measurement interval D2 may be an average value of the intervals between the edges measured in one section in the length direction (X-axis direction) of the electrode sheet Se. The second measurement interval D2 may be appropriately defined as necessary.

Referring to FIGS. 9 to 13, in the manufacturing method according to one embodiment of the present disclosure, position information on the electrode area A_E or the adhesive area A_A is calculated based on infrared information (S40), and whether the manufactured electrode sheet Se is defective is determined based on the position information (S50).

In step S50 of the manufacturing method according to one embodiment of the present disclosure, if the edge L_A of the adhesive area A_A is identified in step S44, the second measurement interval D2 calculated in step S45 is compared with a critical interval (S51), and if the second measurement interval D2 is less than the critical interval, the electrode sheet Se is determined to be good (S52), and if the second measurement interval D2 is greater than the critical interval, the electrode sheet Se is determined to be defective (S53).

At this time, in the present embodiment, the critical interval may be an interval that is a reference for determining whether the electrode area A_E is formed within the adhesive area A_A. In one example, the critical interval may be a difference between the width length of the adhesive area A_A and the width length of the electrode area A_E.

Here, the width length may be a length measured in the left-right direction (Y-axis direction) based on FIG. 11. The critical interval may be a pre-entered data value, or may be directly measured based on the information on the infrared rays obtained in step S30.

Meanwhile, in step S50 of the manufacturing method according to one embodiment of the present disclosure, if the edge L_A of the adhesive area A_A is not identified in step S44, the electrode sheet Se is determined to be defective (S53).

Hereinafter, step S50 of the manufacturing method according to one embodiment of the present disclosure will be described in detail together with an example of manufacturing the electrode sheet Se.

As illustrated in FIG. 11, if the second measurement interval D2 is less than the critical interval, the electrode area A_E is formed within the adhesive area A_A, and thus the electrode sheet Se1 may be determined as a good product.

As illustrated in FIG. 12, if the edge L_A of the adhesive area A_A is not identified, the edge L_A of the adhesive area A_A is covered by the electrode area A_E, and at least a portion of the electrode area A_E may be formed in an area other than the adhesive area A_A, and thus the electrode sheet Se2 may be determined to be defective.

As illustrated in FIG. 13, if the second measurement interval D2 is greater than the critical interval, at least a portion of the electrode area A_E may be formed in an area other than the adhesive area A_A, and thus the electrode sheet Se3 may be determined to be defective.

In this way, according to the manufacturing method according to one embodiment of the present disclosure, whether the electrode sheets Se1 to Se3 are good or defective may be accurately and quickly determined regardless of the colors of the electrode layer E and the adhesive layer A. Through this, a higher quality electrode sheet may be manufactured.

Referring to FIGS. 9 to 14 again, in the manufacturing method according to one embodiment of the present disclosure, whether the electrode sheet Se is good or defective is determined based on position information (S50), and the position where the electrode layer E is formed in the adhesive sheet is adjusted based on the position information (S60).

Accordingly, a good quality electrode sheet Se where the electrode layer E is formed at a more preferable position may be manufactured by the manufacturing method according to one embodiment of the present disclosure. At this time, the order of steps S50 and S60 is not particularly limited.

In step S60 of the manufacturing method according to one embodiment of the present disclosure, if the second measurement interval D2 is calculated in step S40, the second measurement interval D2 is compared with a second reference interval (S61), and the position where the electrode layer E is formed is adjusted based on the comparison result of step S61 (S63).

At this time, in the present embodiment, the second reference interval may be an interval between the edge L_E of the electrode area A_E and the edge L_A of the adhesive area A_A when the electrode layer E is formed at a preferable position. This second reference interval may be a data value that is determined and stored in advance according to the design of the electrode sheet Se.

At this time, in the present embodiment, in step S63, if the second measurement interval D2 is greater than the second reference interval, the position where the electrode layer E is formed is moved to one side of the adhesive sheet in the width direction (Y-axis direction), and if the second measurement interval D2 is less than the second reference interval, the position where the electrode layer E is formed is moved to the other side of the adhesive sheet in the width direction (Y-axis direction). At this time, the distance by which the position of the electrode layer E is moved may correspond to the difference between the second measurement interval D2 and the second reference interval.

Meanwhile, in step S60 of the manufacturing method according to one embodiment of the present disclosure, if the edge L_A of the adhesive area A_A is not identified in step S44, the first measurement interval D1 is compared with the first reference interval (S62), and the position where the electrode layer E is formed is adjusted based on the comparison result of step S62 (S63).

At this time, in the present embodiment, the first reference interval may be an interval between the edge L_E of the electrode area A_E and the edge L_F of the current collector F when the electrode layer E is formed at a preferable position. This second reference interval may be a data value that is determined and stored in advance according to the design of the electrode sheet Se.

At this time, in the present embodiment, in step S63, if the first measurement interval D1 is greater than the first reference interval, the position where the electrode layer E is formed is moved to one side of the adhesive sheet in the width direction (Y-axis direction), and if the first measurement interval D1 is less than the first reference interval, the position where the electrode layer E is formed is moved to the other side of the adhesive sheet in the width direction (Y-axis direction). At this time, the distance by which the position of the electrode layer E is moved may correspond to the difference between the first measurement interval D1 and the first reference interval.

The adjustment of the position of forming the electrode layer E performed in the above-described step S63 may be performed by the processor of the present manufacturing device controlling the position adjustment unit to move the electrode layer forming unit in the width direction (Y-axis direction).

Meanwhile, in the manufacturing method according to one embodiment of the present disclosure, it has been described that step S61 is performed if the edge L_A of the adhesive area A_A is identified in step S44, and step S62 is performed if it is not identified. However, it may be configured to perform step S62 regardless of whether the edge L_A of the adhesive area A_A is identified in step S44, as necessary.

The present inventors confirmed through the following experimental example that the manufacturing device and method according to one embodiment of the present disclosure may be utilized in the electrode manufacturing process. More specifically, the present inventors applied an adhesive layer A having a thickness of 1 µm (micrometers) to a current collector F made of aluminum foil having a thickness of 12 µm, and applied an electrode layer E having a thickness of 100 µm to an outer surface of the adhesive layer A to form an electrode sheet Se. Then, the electrode sheet Se was exposed (i.e., heated) to an atmosphere of 80 degrees for 30 seconds.

The present inventors confirmed that, according to the device and method of the present disclosure, infrared rays of 9.35 µm, 9.42 µm, and 9.54 µm were emitted from the current collector F, the adhesive layer A, and the electrode layer E, respectively, and that the temperatures of the current collector F, the adhesive layer A, and the electrode layer E were 37 degrees, 35 degrees, and 31 degrees, respectively. This suggests that the boundary between the adhesive layer A and the electrode layer E may be accurately identified through the device and method according to the embodiment of the present disclosure.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [List of Reference Numerals]

1: Electrode sheet manufacturing device
10: Adhesive sheet supply unit
20: Electrode layer forming unit
30: Transfer unit
40: Infrared sensor
50: Drying unit
60: Electrode sheet recovery unit
70, 170, 270: Heater
Sa: Adhesive sheet
Se, Se1, Se2, Se3: Electrode sheet
F: Current collector
A: Adhesive layer
E: Electrode layer

## Claims

1. An electrode sheet manufacturing device comprising:
an electrode sheet supply unit for supplying an electrode sheet comprising a foil-shaped current collector, an adhesive layer provided on one surface of the current collector, and an electrode layer formed on an outer surface of the adhesive layer;
an infrared sensor for obtaining information on infrared rays emitted by the electrode sheet; and
a processor for determining whether the electrode sheet is defective based on the information on the infrared rays,
wherein the processor,
based on the information on the infrared rays, calculates information on a position of at least one of an electrode area where the electrode layer is formed and an adhesive area where the adhesive layer is formed on one surface of the current collector, and
determines whether the electrode sheet is defective based on the information on the position.

2. The electrode sheet manufacturing device according to claim 1,
wherein the adhesive layer and the electrode layer have the same color.

3. The electrode sheet manufacturing device according to claim 1, further comprising:
a heater for applying heat to the electrode sheet,
wherein the infrared sensor obtains information on infrared rays emitted by the adhesive layer and the electrode layer heated by the heater.

4. The electrode sheet manufacturing device according to claim 3,
wherein the heater and the infrared sensor are arranged side by side along a transfer direction of the electrode sheet.

5. The electrode sheet manufacturing device according to claim 3,
wherein the heater and the infrared sensor are arranged side by side along a direction perpendicular to the transfer direction of the electrode sheet.

6. The electrode sheet manufacturing device according to claim 3,
wherein the heater and the infrared sensor are spaced apart from each other in a direction perpendicular to the electrode sheet with the electrode sheet interposed therebetween.

7. The electrode sheet manufacturing device according to claim 1, further comprising:
a drying unit for drying the electrode sheet.

8. The electrode sheet manufacturing device according to claim 7,
wherein the infrared sensor obtains information on the infrared rays at the front end of the drying unit in the transfer direction of the electrode sheet.

9. An electrode sheet manufacturing method comprising:
a step of providing an electrode sheet comprising a foil-shaped current collector, an adhesive layer provided on one surface of the current collector, and an electrode layer formed on an outer surface of the adhesive layer;
a step of obtaining information on infrared rays emitted by the electrode sheet;
a step of calculating information on a position of at least one of an electrode area where the electrode layer is formed and an adhesive area where the adhesive layer is formed on one surface of the current collector, based on the information on the infrared rays; and
a step of determining whether the electrode sheet is defective based on the information on the position.

10. The electrode sheet manufacturing method according to claim 9,
wherein the adhesive layer and the electrode layer have the same color.

11. The electrode sheet manufacturing method according to claim 9, further comprising:
a heating step of applying heat to the electrode sheet,
wherein in the step of obtaining information on the infrared rays, information on infrared rays emitted by the electrode sheet heated in the heating step is obtained.

12. The electrode sheet manufacturing method according to claim 9, further comprising:
a drying step of drying the electrode sheet,
wherein the step of obtaining information on the infrared rays is performed before the drying step.

13. The electrode sheet manufacturing method according to claim 9,
wherein the step of calculating the position information comprises:
a step of identifying the edge of the current collector; and
a step of identifying the edge of the electrode area.

14. The electrode sheet manufacturing method according to claim 13,
wherein the step of providing the electrode sheet comprises:
a step of providing an adhesive sheet comprising the current collector and the adhesive layer; and
a step of forming the electrode layer by applying an electrode active material to an outer surface of the adhesive layer,
wherein the step of calculating the position information further comprises:
a step of calculating a first measurement interval which is an interval between the edge of the current collector and the edge of the electrode area.

15. The electrode sheet manufacturing method according to claim 14, further comprising:
a step of adjusting a position where the electrode layer is formed in the adhesive sheet, based on the information on the position,
wherein the step of adjusting the position where the electrode layer is formed comprises:
a step of comparing the first measurement interval with a first reference interval;
a step of moving the position where the electrode layer is formed to one side of the adhesive sheet in the width direction, if the first measurement interval is greater than the first reference interval; and
a step of moving the position where the electrode layer is formed to the other side of the adhesive sheet in the width direction, if the first measurement interval is less than the first reference interval.

16. The electrode sheet manufacturing method according to claim 14,
wherein the step of calculating the position information further comprises a step of identifying the edge of the adhesive area.

17. The electrode sheet manufacturing method according to claim 16,
wherein the step of determining whether the electrode sheet is defective comprises a step of determining that the electrode sheet is defective if the edge of the adhesive area is not identified.

18. The electrode sheet manufacturing method according to claim 16,
wherein the step of calculating the position information further comprises a step of calculating a second measurement interval which is an interval between the edge of the adhesive area and the edge of the electrode area.

19. The electrode sheet manufacturing method according to claim 18, further comprising:
a step of adjusting a position where the electrode layer is formed on the adhesive sheet, based on the information on the position,
wherein the step of adjusting the position where the electrode layer is formed comprises:
a step of comparing the second measurement interval with a second reference interval;
a step of moving the position where the electrode layer is formed to one side of the adhesive sheet in the width direction, if the second measurement interval is greater than the second reference interval; and
a step of moving the position where the electrode layer is formed to the other side of the adhesive sheet in the width direction, if the second measurement interval is less than the second reference interval.

20. The electrode sheet manufacturing method according to claim 18,
wherein the step of determining whether the electrode sheet is defective comprises:
a step of comparing the second measurement interval with a critical interval, if the edge of the adhesive area is identified; and
a step of determining that the electrode sheet is defective, if the second measurement interval is greater than the critical interval.
